# EUROPEAN PATENT APPLICATION

(11) **EP 2 696 049 A1**
(43) Date of publication of application: **12.02.2014**
(21) Application number: 11862921.1
(22) Date of filing: 08.04.2011
(51) Int. Cl.: F01N 3/36

(54) **INTERNAL COMBUSTION ENGINE**

(71) Applicant: TOYOTA JIDOSHA KABUSHIKI KAISHA, Toyota-shi, Aichi-ken, 471-8571 (JP)
(72) Inventor: FUSE, Hidetaka, Toyota-shi, Aichi-ken, 471-8571 (JP); MORI, Toshihiro, Toyota-shi, Aichi-ken, 471-8571 (JP); INOUE, Mikio, Toyota-shi, Aichi-ken, 471-8571 (JP)
(74) Representative: Albutt, Anthony John
(86) International application number: PCT/JP2011/002108
(87) International publication number: WO 2012/137266

(57) **Abstract**

An internal combustion engine according to the present invention includes an exhaust treatment apparatus provided in an exhaust passage and a burner apparatus provided upstream of the exhaust treatment apparatus. The burner apparatus includes at least a fuel addition valve that adds fuel into the exhaust passage and heating means for heating the fuel added through the fuel addition valve. The burner apparatus is controlled such that fuel is added through the fuel addition valve in synchronism with a variation in an exhaust velocity at a predetermined position at or near the burner apparatus. Stability in ignition and combustion of the added fuel can be improved.

## Description

### Technical Field

The present invention relates to an internal combustion engine, and in particular, to an internal combustion engine with a burner apparatus provided upstream of an exhaust treatment apparatus in an exhaust passage.

### Background Art

In some internal combustion engines, a burner apparatus is provided in an exhaust passage upstream of an exhaust treatment apparatus (a catalyst or the like) so that heating gas generated by the burner apparatus can be utilized to increase an exhaust temperature to heat the exhaust treatment apparatus, thus promoting warm-up of the exhaust treatment apparatus. The burner apparatus typically ignites and combusts fuel added into the exhaust passage to generate heating gas containing flames. In some cases, a small oxidation catalyst is provided in the exhaust passage to reform or combust the added fuel.

For example, an apparatus described in PTL 1 intermittently generates flames downstream of the small oxidation catalyst by directly and intermittently supplying fuel to the small oxidation catalyst in the exhaust passage.

For ignition and combustion of the added fuel, an air-fuel mixture containing the added fuel and exhaust gas needs to be in a state suitable for the ignition and combustion. However, in the exhaust passage, exhaust velocity may vary mainly due to exhaust pulsation, and this variation has not been taken into account. Hence, disadvantageously, the ignition and combustion have been unstable.

Thus, an object of the present invention is to solve the above-described problem and to provide an internal combustion engine that enables improvement of stability in the ignition and combustion of the added fuel.

### Citation List

### Patent Literature

PTL 1: Japanese Patent Laid-Open No. 2010-59886

### Summary of Invention

An aspect of the present invention provides an internal combustion engine including:
an exhaust treatment apparatus provided in an exhaust passage;
a burner apparatus provided upstream of the exhaust treatment apparatus; and
burner control means for controlling the burner apparatus,
wherein the burner apparatus includes at least a fuel addition valve that adds fuel into the exhaust passage and heating means for heating the fuel added through the fuel addition valve, and
the burner control means allows fuel to be added through the fuel addition valve in synchronism with a variation in an exhaust velocity at a predetermined position at or near the burner apparatus.

Preferably, the burner control means allows fuel to be added through the fuel addition valve in such a manner that the added fuel is ignited when a value of the exhaust velocity at the predetermined position becomes zero.

Preferably, the burner control means allows fuel to be added through the fuel addition valve when the value of the exhaust velocity at the predetermined position becomes equal to a predetermined positive or negative value.

Preferably, the burner control means allows fuel to be added through the fuel addition valve when the value of the exhaust velocity at the predetermined position becomes equal to the predetermined positive value and when the added fuel combusts near the exhaust treatment apparatus.

Preferably, the burner control means allows fuel to be added through the fuel addition valve when the value of the exhaust velocity at the predetermined position becomes equal to the predetermined negative value and when the added fuel combusts upstream of the heating means.

Preferably, the burner control means allows the fuel addition valve to carry out a pilot addition in which a relatively small amount of fuel is added per addition and to carry out, after the pilot addition, a main addition in which a larger amount of fuel is added than during the pilot addition, and
allows the fuel addition valve to carry out the pilot addition when the value of the exhaust velocity becomes zero while changing from positive to negative and subsequently to carry out the main addition when the value of the exhaust velocity becomes equal to the predetermined positive value after changing from negative to positive.

Preferably, the heating means includes a glow plug, and the internal combustion engine further includes glow control means for controlling power supplied to the glow plug, and
the glow control means changes the power supplied to the glow plug in synchronism with a variation in the exhaust velocity at the predetermined position.

Preferably, the internal combustion engine further includes acquisition means for acquiring a value of the exhaust velocity at the predetermined position or a correlation value of the exhaust velocity, and
the burner control means controls an addition period for the fuel addition valve based on the value of the exhaust velocity or the correlation value of the exhaust velocity acquired by the acquisition means.

Preferably, the burner apparatus further includes a small oxidation catalyst provided in the exhaust passage downstream of the heating means.

The present invention is very effective for improving the stability in ignition and combustion of the added fuel.

### Brief Description of Drawings

[Fig. 1] Fig. 1 is a schematic diagram of an internal combustion engine according to an embodiment of the present invention;
[Fig. 2] Fig. 2 is a diagram showing a valve timing for an exhaust valve;
[Fig. 3] Fig. 3 is a diagram showing a crank angle and corresponding strokes of cylinders;
[Fig. 4] Fig. 4 is a diagram showing the maximum exhaust gas temperature during a plurality of addition periods;
[Fig. 5] Fig. 5 is a diagram showing fuel addition carried out in synchronism with a variation in exhaust velocity;
[Fig. 6] Fig. 6 is a diagram schematically showing a valve open state of an exhaust valve in each cylinder and an average exhaust velocity;
[Fig. 7] Fig. 7 is a diagram showing a third example to a fifth example of synchronous addition control;
[Fig. 8] Fig. 8 is a diagram showing a sixth example and a seventh example of synchronous addition control;
[Fig. 9] Fig. 9 is a diagram showing an eighth example of synchronous addition control;
[Fig. 10] Fig. 10 is a diagram showing a comparative example of a ninth example; and
[Fig. 11] Fig. 11 is a diagram showing the ninth example.

### Description of Embodiments

A preferred embodiment of the present invention will be described below in detail. However, it should be noted that the embodiment of the present invention is not limited to aspects described below and that the present invention includes any variations and applications embraced in the concepts of the present invention defined by the claims. The dimensions, materials, shapes, relative arrangements, and the like of components described in the embodiment are not intended to limit the technical scope of the invention thereto unless otherwise specified.

In the description below, an upstream side is also expressed as "before", and a downstream side is also expressed as "after".

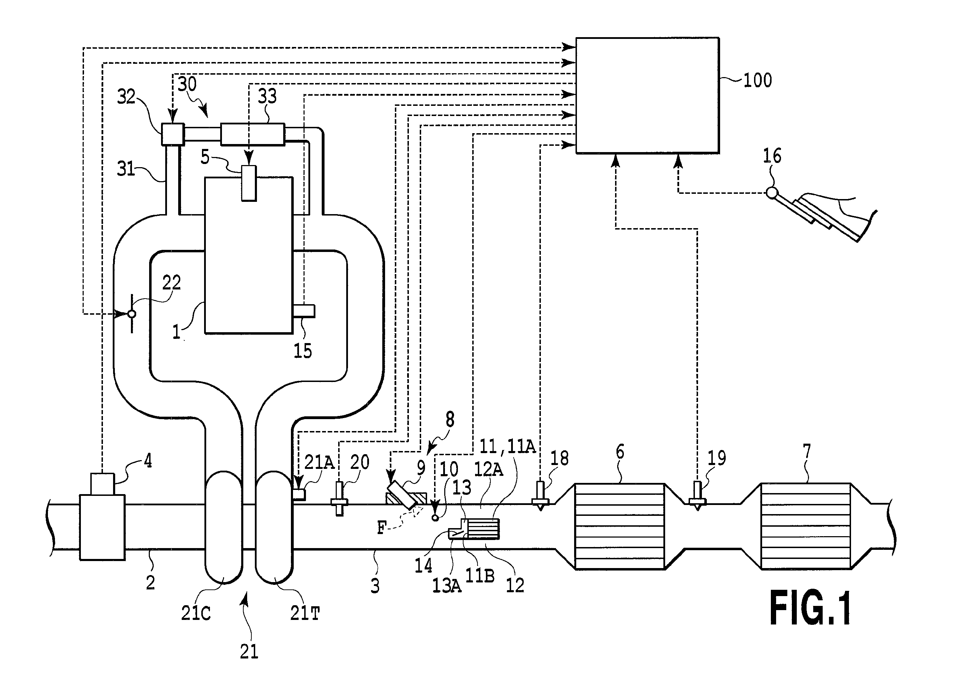

Fig. 1 schematically shows a configuration of an internal combustion engine according to the present embodiment. The engine is a vehicle-mounted four-cycle diesel engine. An engine main body 1 connects to an intake pipe 2 serving as an intake passage and an exhaust pipe 3 serving as an exhaust passage. An airflow meter 4 is provided in the middle of the intake pipe 2 to output a signal corresponding to the flow rate of intake air flowing through the intake pipe 2. The airflow meter 4 detects the amount of intake air flowing into the engine main body 1 per unit time (that is, an intake flow rate). The engine main body 1 has a plurality of cylinders each including a fuel injection valve, that is, an intra-cylinder injection valve 5 that allows fuel to be injected directly into the cylinder. Fig. 1 shows only a single intra-cylinder injection valve 5.

A turbo charger 21 is provided in the middle of the exhaust pipe 3. The turbo charger 21 has a turbine 21T driven by exhaust gas and a compressor 21C driven by the turbine 21T to supercharge intake air. The turbine 21T includes a plurality of variable vanes (not shown in the drawings) that varies an inlet flow rate for the turbine 21T and a vane actuator 21A that simultaneously opens and closes the variable vanes. A throttle valve 22 is provided on a downstream side of the compressor 5C.

The engine 1 includes an EGR apparatus 30. The EGR apparatus 30 carries out EGR for feeding exhaust gas in the exhaust pipe 3 back to the inlet pipe 2 (external EGR). The EGR apparatus 30 includes an EGR passage 31 that connects the exhaust pipe 3 and the inlet pipe 2 together, an EGR cooler 33 and an EGR valve 32 provided on the EGR passage 31 in this order from an upstream side. The EGR cooler 33 cools exhaust gas extracted from the exhaust pipe 3, that is, EGR gas. The EGR valve 32 is opened and closed to adjust the flow rate of EGR gas flowing through the EGR passage 31.

An outlet portion of the exhaust pipe 3 (not shown in the drawings) is open to the atmosphere via a muffler. Furthermore, as shown in Fig. 1, an oxidation catalyst 6 and an NOx catalyst 7 are arranged in the middle of the exhaust pipe 3 in series in this order from the upstream side.

The oxidation catalyst 6 allows unchanged components such as HC and CO to react with O₂ to obtain CO, CO₂, H₂O, and the like. A catalytic material may be, for example, Pt/CeO₂, Mn/CeO₂, Fe/CeO₂, Ni/CeO₂, or Cu/CeO₂.

The NOx catalyst 7 preferably includes an NOx catalyst of storage reduction type (NSR: NOx Storage Reduction). The NOx catalyst 7 has a function to absorb and store NOx in the exhaust when the inflow exhaust has a high oxygen concentration and to reduce the stored NOx to NOx when the oxygen concentration of the inflow exhaust decreases and when reductive component (for example, fuel) is present. The NOx catalyst 7 includes a base material formed of an oxide such as alumina Al₂O₃, and rare metal such as platinum Pt which serves as a catalytic component and an NOx absorbing component both carried on a surface of the base material. The NOx absorbing component contains at least one component selected from, for example, alkali metals such as potassium K, sodium Na, lithium Li, and cesium Cs, alkali earths such as barium Ba and calcium Ca, and rare earths such as lanthanum La and yttrium Y. The NOx catalyst 7 may be an NOx catalyst of selective reduction type (SCR: Selective Catalytic Reduction).

In addition to the oxidation catalyst 6 and the NOx catalyst 7, a particulate filter (DPF) may be provided which collects particulates (PM) such as soot in the exhaust. Preferably, the DPF is of a continuous regeneration type which carries a catalyst formed of rare metal thereon to continuously oxidize and combust collected particulates. Preferably, the DPF is disposed downstream of the oxidation catalyst 6 and upstream or downstream of the NOx catalyst 7. The engine may be a spark ignition internal combustion engine, and in this case, a three-way catalyst is preferably provided in the exhaust passage. The oxidation catalyst 6, the NOx catalyst 7, the DPF, and the three-way catalyst correspond to an exhaust treatment apparatus according to the present invention.

In the exhaust pipe 3, a burner control apparatus 8 is installed downstream of a turbine 21T and upstream of the oxidation catalyst 6. The burner apparatus 8 is configured to increase the temperature of exhaust gas and includes a fuel addition valve 9, and a heater or a glow plug 10 serving as a heating apparatus or heating means. Furthermore, the burner apparatus according to the present embodiment includes a small oxidation catalyst 11.

The fuel addition valve 9 injects, feeds, or adds fuel F into the exhaust pipe 3. Light oil that is fuel for the engine is also used directly as the fuel F, but another type of fuel may be used. The fuel addition valve 9 injects the fuel from an outer peripheral portion of the exhaust pipe 3 at a circumferential predetermined position toward a central portion of the exhaust pipe 3 and obliquely downward. In the illustrated example, the fuel addition valve 9 injects the fuel F from an upper portion to the central portion of the exhaust pipe 3 and obliquely downward toward the downstream side.

The glow plug 10 heats the fuel added by the fuel addition valve 9, more specifically a mixture of the fuel F and the exhaust gas. The glow plug 10 is disposed downstream of the fuel addition valve 9 and installed, by being inserted from a side portion of the exhaust pipe 3, so that the axis of the glow plug 10 is perpendicular to the axis of the fuel addition valve 9. The glow plug 10 is also disposed such that a heating section the glow plug 10 at a leading end thereof is approximately opposite the injected fuel F. That is, the fuel addition valve 9 injects the fuel toward the heating section of the glow plug 10. The glow plug 10 is connected to a vehicle-mounted battery via a booster circuit (not shown in the drawings) so that the heating section generates heat when the glow plug 10 is energized. The glow plug 10 may be disposed in any orientation.

Preferably, the glow plug 10 is installed sufficiently away from the fuel addition valve 9 so that the fuel F in the form of droplets injected through the fuel addition valve 9 fail to reach the glow plug 10. However, the glow plug 10 may be installed relatively near the fuel addition valve 9 so that the fuel F can reach the glow plug 10.

The small oxidation catalyst 11 is installed in the exhaust pipe 3 downstream of the glow plug 10. The small oxidation catalyst 11 has an outer diameter smaller than the inner diameter of the exhaust pipe 3. An axial direction of the small oxidation catalyst 11 is parallel to an axial direction of the exhaust pipe 3. The small oxidation catalyst 11 is disposed approximately coaxially with the exhaust pipe 3. The small oxidation catalyst 11 has a cross-sectional area sized to occupy a part of the cross-sectional area of the exhaust pipe 3. The small oxidation catalyst 11 is installed in the exhaust pipe 3 by a plurality of stays (not shown in the drawings) so as to suspend inside the exhaust pipe 3.

The small oxidation catalyst 11 is of what is called a straight flow type in which individual cells communicate with one another from the upstream side to the downstream side. The small oxidation catalyst 11 may be configured identically to or differently from the oxidation catalyst 6, located downstream of the small oxidation catalyst 11. For example, the small oxidation catalyst 11 may be formed of a zeolite carrier carrying rhodium thereon. A gas passage inside the small oxidation catalyst 11 is referred to as an intra-catalyst passage 11A.

On the other hand, an outer peripheral passage 12 is defined radially outside the small oxidation catalyst 11, that is, between the small oxidation catalyst 11 and the exhaust pipe 6, so that exhaust gas flows through the outer peripheral passage 12. In particular, an addition valve side outer peripheral passage, that is, an upper outer peripheral passage 12A, which is a part of the outer peripheral passage 12, is also defined at a circumferential predetermined position, and in the illustrated example, at an upper position, where the fuel addition valve 9 is installed.

The small oxidation catalyst 11 includes a guide pipe 13 provided on a front end surface 11B so as to extend forward all along the circumference of an outer peripheral edge thereof. An upper half of the guide pipe 13 is cut rearward from the front end of the guide pipe 13 over a predetermined length to form a gutter- or half round pipe-shaped guide plate 13A. A front end of the guide pipe 13 is also positioned downstream of the glow plug 10. As described below in detail, the guide pipe 13 is configured to guide an air-fuel mixture and flames generated by fuel addition into the small oxidation catalyst 11.

An impact plate 14 is installed inside the guide pipe 13 so as to traverse the guide plate 13A. The impact plate 14 is formed of a flat plate and inclined such that one surface, that is, an upper surface of the impact plate 14 generally faces the fuel addition valve 9 and the glow plug 10. As described below in detail, the impact plate 14 is configured such that an air-fuel mixture and flames generated by fuel addition impact the impact plate 14 so as to be easily introduced into the small oxidation catalyst 11.

The small oxidation catalyst 11, the guide pipe 13, and the impact plate 14 are integrated together to form a small oxidation catalyst unit.

The engine includes an electronic control unit (hereinafter referred to as an ECU) 100 serving as control means for integrally controlling the engine. The ECU 100 includes a CPU that carries out various arithmetic processes for engine control, a ROM that stores programs and data needed for the control, a RAM that temporarily stores, for example, the results of calculations by the CPU, and an I/O port through which signals are received from and output to an external device.

The ECU 100 connects to, besides the above-described airflow meter 4, a crank angle sensor 15 configured to detect the crank angle of the engine and an accelerator opening sensor 16 configured to detect the degree of opening of the accelerator. The ECU 100 calculates the rotation speed of the engine based on an output value from the crank angle sensor 15, and calculates a demand load on the engine based on the output value from the accelerator opening sensor 16.

Furthermore, an upstream exhaust temperature sensor 18 and a downstream exhaust temperature sensor 19 are provided before and after, respectively the oxidation catalyst 6 in the exhaust pipe 3. The upstream temperature sensor 18 and the downstream temperature sensor 19 are connected to the ECU 100. The sensors are configured to detect the temperature of exhaust gas. The ECU 100 estimates the temperature of the oxidation catalyst 6 based on detection values from these sensors.

An oxygen concentration sensor 20 is provided upstream of the burner apparatus 8 in the exhaust pipe 3 and downstream of the turbine 21T. The oxygen concentration sensor 20 is configured to detect the oxygen concentration of exhaust gas and may include, for example, a linear A/F sensor or an 02 sensor.

The ECU 100 connects to the intra-injection valve 5, the throttle valve 22, the EGR valve 32, the vane actuator 21A, the fuel addition valve 9, and the glow plug 10, all of which are controlled by the ECU 100.

The burner apparatus 8 as described above is used or actuated to activate the oxidation catalyst 6 and the NOx catalyst 7 (particularly the upstream side oxidation catalyst 6), which form a main exhaust treatment apparatus, as early as possible during warm-up of the engine after cold start. Even while the engine is not being warmed up, the burner apparatus 8 is used or actuated when the oxidation catalyst 6 and the NOx catalyst 7 have their temperatures reduced and become inactive.

When the burner apparatus 8 is actuated, the fuel addition valve 9 and the glow plug 10 are turned on to inject or add fuel into the exhaust passage through the fuel addition valve 9. The fuel is mixed with exhaust gas (particularly oxygen contained in the exhaust gas) to form an air-fuel mixture. The air-fuel mixture is ignited and combusted under the heating effect of the glow plug 10, thus generating heating gas containing flames. The heating gas mixes with surrounding exhaust gas, while sequentially heating the oxidation catalyst 6 and the NOx catalyst 7 to increase the temperatures thereof.

Once the oxidation catalyst 6 is activated, CO and HC in the exhaust gas can be oxidized and combusted by the oxidation catalyst 6, and the resultant oxidation heat keeps the oxidation catalyst 6 at high temperatures and allows hot gas to be discharged from the oxidation catalyst 6. The hot gas can be fed to the NOx catalyst 7 to activate the NOx catalyst 7. At least once the oxidation catalyst 6 is activated, the burner apparatus 8 can be stopped.

While the burner apparatus 8 is in operation, the small oxidation catalyst 11 is initially cold and inactive. However, the small oxidation catalyst 11 is gradually heated by surrounding exhaust gas and heating gas containing flames to have its temperature increased to approach an active state. The small oxidation catalyst 11 has a small volume, and gas flowing through the intra-catalyst passage 11A flows faster than gas flowing around the small oxidation catalyst 11. Hence, the small oxidation catalyst 11 can be activated relatively early, particularly, earlier than the oxidation catalyst 6.

Once activated, the small oxidation catalyst 11 can, like the oxidation catalyst 6, oxidize and combust the introduced air-fuel mixture of the added fuel F and oxygen, while simultaneously oxidizing and combusting CO and HC in the exhaust gas. In particular, the oxidation heat of the oxidation and combustion of the air-fuel mixture quickly heats the small oxidation catalyst 11 to a significantly high temperature. The small oxidation catalyst 11 can also combust the air-fuel mixture to generate flames. The resultant hot heating gas from the small oxidation catalyst 11 can be utilized to further promote the warm-up and activation of the oxidation catalyst 6.

Furthermore, the small oxidation catalyst 11 has a function to reform fuel components of the introduced air-fuel mixture. Specifically, hydrocarbon in the fuel components which has a large carbon number is decomposed into more reactive hydrocarbon with a smaller carbon number. This makes the fuel components more reactive. The reformed fuel components can be oxidized by the downstream side oxidation catalyst 6 more easily than unreformed fuel components. This greatly assists in activating the oxidation catalyst 6 early.

Thus, for example, during the warm-up of the engine after start-up, when both the small oxidation catalyst 11 and the oxidation catalyst 6 are inactive, the small oxidation catalyst 11 is preferably activated earlier than or in preference to the downstream side oxidation catalyst 6. Specifically, preferably, the small oxidation catalyst 11 is supplied with heating gas more actively than the oxidation catalyst 6 so as to be more actively heated with the heating gas.

On the other hand, preferably, after the small oxidation catalyst 11 is activated, the oxidation catalyst 6 is supplied with heating gas more actively than the small oxidation catalyst 11 so as to be more actively heated with the heating gas, thus promoting the warm-up of the oxidation catalyst 6.

In general, for ignition and combustion of added fuel, the state of an air-fuel mixture of the added fuel and exhaust gas needs to be suitable for the ignition and combustion. However, in the exhaust passage 3, the exhaust velocity may vary mainly due to exhaust pulsation, and this variation has not been taken into account. Hence, disadvantageously, the ignition and combustion are unstable.

Thus, to improve the stability in igniting and combusting the added fuel, the present embodiment adds fuel through the fuel addition valve 9 in synchronism with a variation in exhaust velocity at a predetermined position at or near the burner apparatus 8. This will be described below in detail.

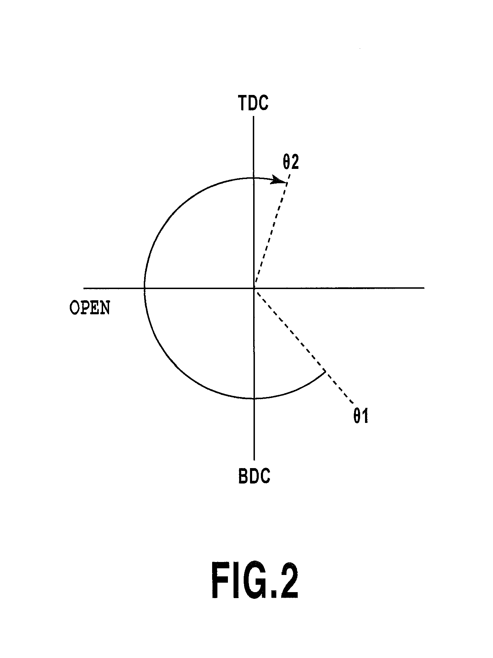

Fig. 2 shows a valve timing for an exhaust valve in each cylinder. In Fig. 2, BDC denotes an exhaust bottom dead center, TDC denotes an exhaust top dead center, θ1 denotes a valve opening period for the exhaust valve, and θ2 denotes a valve closing period for the exhaust valve. According to the present embodiment, the valve opening period θ1 corresponds to a CA of 51° before the exhaust bottom dead center. The valve closing period θ2 corresponds to a CA of 2° after the exhaust top dead center.

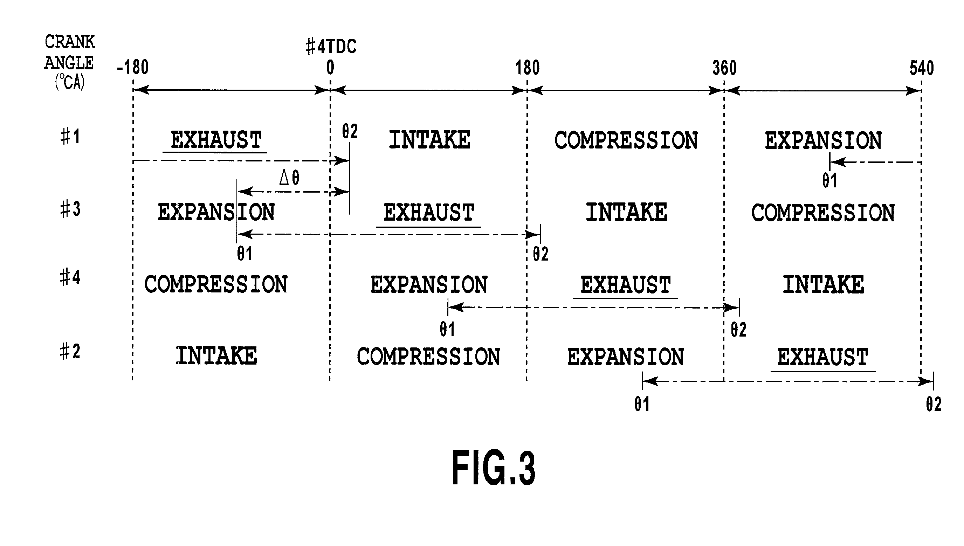

Fig. 3 shows the crank angle and corresponding strokes of each cylinder. The compression top dead center of a cylinder #4 (#4TDC) corresponds to a reference, that is, a crank angle of 0°. Combustion occurs in the cylinders in the following order: a cylinder #1, a cylinder #3, the cylinder #4, and a cylinder #2. In Fig. 3, "intake", "compression", "expansion", and "exhaust" mean an intake stroke, a compression stroke, an expansion (combustion) stroke, and an exhaust stroke.

Fig. 3 shows the valve opening period θ1 and the valve closing period θ2 for the exhaust valve in each cylinder. As is apparent from these periods, one engine cycle (a CA of -180° to 540°) includes four periods during which the exhaust valves in two cylinders are simultaneously open, that is, four exhaust overlap periods Δθ.

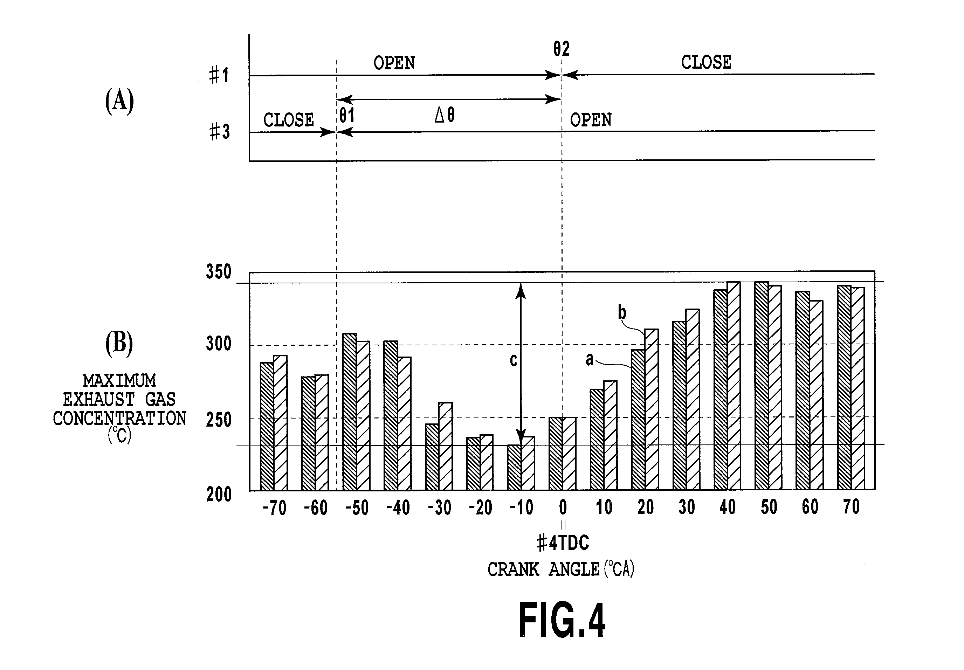

Fig. 4(A) shows how the exhaust valves in the cylinders #1 and #3 are open and closed. For convenience, the valve closing period θ2 for the cylinder #1 corresponds to a CA of 0°. Furthermore, Fig. 4(B) shows the results of tests for the relations between an addition period for the fuel addition valve 9 (the axis of abscissas) and the maximum exhaust gas temperature corresponding to each addition period (the axis of ordinate).

For Fig. 4(B), under the condition that operating conditions are constant, fuel addition is repeatedly carried out with the addition period for the fuel addition valve 9 fixed to a predetermined crank angle. The maximum temperature of exhaust gas flowing into the oxidation catalyst 6 is measured and displayed as the maximum exhaust gas temperature in Fig. 4(B). In this case, a denotes the first measurement data, and b denotes the second measurement data. The ignitability and combustibility of the burner apparatus increase consistently with the maximum exhaust gas temperature.

For example, the data "#4TDC = 0° CA" involves the fuel addition carried out through the fuel addition valve 9 every time the #4TDC arrives. When this is continued for a predetermined time, the maximum temperature of exhaust gas flowing into the oxidation catalyst 6 is measured. In the illustrated example, the maximum exhaust gas temperature is about 250°C during both the first and third fuel additions.

Such measurement is carried out over the CA range of -70°C to 70°C with the addition period varied by a CA of 10°. The results are shown in Fig. 4(B).

The illustrated results indicate that the maximum exhaust gas temperature varies depending on the addition period and that the ignitability and combustibility are high in certain optimum addition periods. The difference between the minimum value and the maximum value of the maximum exhaust gas temperature is as high as 100°C or higher.

As a result of earnest studies, the present inventors have found that the exhaust velocity varies in the exhaust pipe 3 mainly due to exhaust pulsation and that the variation in exhaust velocity significantly affects the ignitability and combustibility of the added fuel. Thus, the present embodiment utilizes this characteristic to allow the fuel to be added through the fuel addition valve 9 in synchronism with a variation in exhaust velocity at a predetermined position at or near the burner apparatus 8.

The predetermined position at or near the burner apparatus 8 is the position of a heat generation section of the glow plug 10. This is because ignition is most likely to occur at the position of the heat generation section. However, the predetermined position can be optionally set. For example, the predetermined position may be a position located at a predetermined upstream or downstream distance from the glow plug 10 or along the axis of an orifice of the fuel addition valve 9. The predetermined position is hereinafter referred to as a reference position.

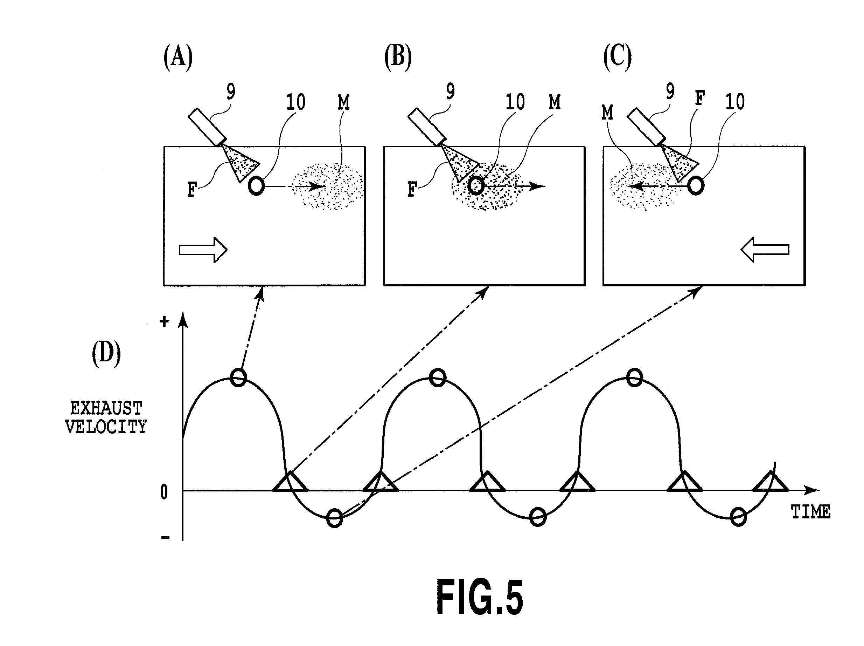

Fig. 5 shows the fuel addition carried out in synchronism with a variation in exhaust velocity. For convenience, the illustration of the small oxidation catalyst unit is omitted. Fig. 5(D) shows a variation in exhaust velocity at the reference position. If the exhaust velocity is zero, no exhaust gas flows at the reference position. If the exhaust velocity is positive, the exhaust gas at the reference position flows forward toward the downstream side. If the exhaust velocity is negative, the exhaust gas at the reference position flows backward toward the upstream side. The exhaust velocity at the reference position periodically varies and generally has a positive value but may be zero or have a negative value. This means that the exhaust gas at the reference position generally flows forward but may be stagnant or flow backward. Indeed, the exhaust gas generally flows forward, and thus, the exhaust velocity constantly has a positive average value.

Fig. 5(A) shows that the fuel addition is carried out when the exhaust velocity has a positive value (this is referred to as forward flow addition), particularly that fuel addition is carried out when the exhaust velocity is at the maximum peak. In this case, exhaust gas is flowing relatively intensely toward the downstream side, and thus, the added fuel F tends to be immediately washed away downstream and diffused by the exhaust gas and to form a relatively lean air-fuel mixture M at a downstream position of the glow plug 10. The air-fuel mixture M spans a relatively wide range and correspondingly tends to have a small fuel concentration per unit volume.

Fig. 5(B) shows that the fuel addition is carried out when the exhaust velocity is zero (this is referred to as "zero flow addition"). In this case, the exhaust gas is stagnant, and thus, the added fuel F forms a relatively rich air-fuel mixture M around the glow plug 10. The air-fuel mixture M spans a narrow range, and tends to have a high concentration per unit volume of the air-fuel mixture M.

Fig. 5(C) shows that the fuel addition is carried out when the exhaust velocity has a negative value (this is referred to as backward flow addition), particularly that fuel addition is carried out when the exhaust velocity is at the minimum peak. In this case, exhaust gas is flowing toward the upstream side (that is, flowing backward), and thus, the added fuel F tends to be immediately washed away upstream and diffused by the exhaust gas and to form a relatively lean air-fuel mixture M at an upstream position of the glow plug 10. The air-fuel mixture M spans a relatively wide range and correspondingly tends to have a small fuel concentration per unit volume.

Here, the "exhaust velocity has a value of zero" means that the exhaust velocity has a value of substantially zero or a value within a predetermined very narrow range including zero. On the other hand, the "exhaust velocity has a positive value" means that the exhaust velocity has a value larger than all the values within the predetermined range. The "exhaust velocity has a negative value" means that the exhaust velocity has a value smaller than all the values within the predetermined range.

In the above-described cases, the ignitability and combustibility are highest in the case of zero flow addition as shown in Fig. 5(B). This is because a relatively rich air-fuel mixture M formed around the glow plug 10 receives heat directly from the glow plug 10 and is immediately ignited. Hence, the zero flow addition is preferably carried out in order to stably and reliably ignite and the added fuel F.

However, strictly speaking, an ignition delay is present between the addition and the ignition of the fuel F. Hence, the optimum addition period corresponds to a time equivalent to the ignition delay before a point of time when the exhaust velocity becomes zero. In other words, the optimum addition period is such that the added fuel is ignited when the value of the exhaust velocity at the reference position becomes zero.

In contrast, the cases of the forward flow addition in Fig. 5(A) and the backward flow addition kin Fig. 5(C) are not necessarily optimum in terms of improved ignitability and combustibility. Degraded ignitability and combustibility increase the amount of fuel needed to be added, leading to increased fuel consumption. However, depending on the situation, the air-fuel mixture M may preferably be ignited at an upstream or downstream position of the glow plug 10. Thus, the present embodiment allows the fuel to be added through the fuel addition valve 9 when the value of the exhaust velocity at the reference position becomes equal to a predetermined positive or negative value. This will be described below.

When the forward flow addition is compared with the backward flow addition, the backward flow addition is more preferable in view of improved ignitability and combustibility. The forward flow addition involves a simple downstream flow of the added fuel, but the backward flow addition involves a temporary backward flow of the added fuel followed by a forward flow, during which the air-fuel mixture M is reformed or upgraded by the heat of the exhaust gas, further receives heat from the glow plug 10, and is thus likely to be ignited. Thus, the backward flow addition is the second most preferable aspect to the zero flow addition.

Fuel addition control (synchronous addition control) synchronized with a variation in exhaust velocity will be more specifically described.

The present embodiment acquires the value of the exhaust velocity at the reference position at the reference position or a correlation value of the exhaust velocity. Then, based on the acquired value of the exhaust velocity or the correlation value thereof, the addition period for the fuel addition valve 9 is controlled. In other words, when the acquired value of the exhaust velocity or the correlation value thereof becomes equal to a predetermined value, fuel is added through the fuel addition valve 9. The "acquisition" as used herein includes both "detection" and "estimation".

The exhaust velocity refers to the velocity of exhaust gas. Furthermore, the correlation value of the exhaust velocity is a value correlated with the velocity of the exhaust gas, for example, the pressure or temperature of the exhaust gas. In accordance with the Bernoulli's theorem, the pressure of the exhaust gas decreases with increasing velocity of the exhaust gas. Thus, the pressure of the exhaust gas is correlated with the velocity of the exhaust gas. Furthermore, based on the relation "PV/T = constant", it is expected that, under a constant pressure, the temperature of the exhaust gas increases consistently with the velocity of the exhaust gas. Consequently, the temperature of the exhaust gas is also expected to be a value correlated with the velocity of the exhaust gas. Alternatively, the air-fuel ratio of the exhaust gas may be used as a correlation value.

Now, a case where the value of the exhaust velocity itself is used will be mainly described. In a first aspect, the value of the exhaust velocity at the reference position is detected by a flow velocity sensor such as an airflow meter. In this case, the flow velocity sensor may be provided integrally with the glow plug 10 or in proximity to and separately from the glow plug 10. When or every time the exhaust velocity detected by the flow velocity sensor becomes equal to a predetermined value, fuel is added through the fuel addition valve 9.

When the correlation value of the exhaust velocity is used, for example, a pressure sensor or a temperature sensor is provided instead of the flow velocity sensor. When or every time the exhaust pressure or exhaust temperature detected by the sensor becomes equal to a predetermined value, fuel is added through the fuel addition valve 9. An output from the sensor may be subjected to Fourier analysis to obtain frequency components, and the value of the exhaust velocity may be determined based on the distribution of the frequency components.

Then, in a second aspect, the value of the exhaust velocity at the reference position is estimated. In this case, the value of the exhaust velocity may be estimated based on engine parameters (for example, rotation speed and demand load) that are indicative of an engine operation state, and the value of the crank angle.

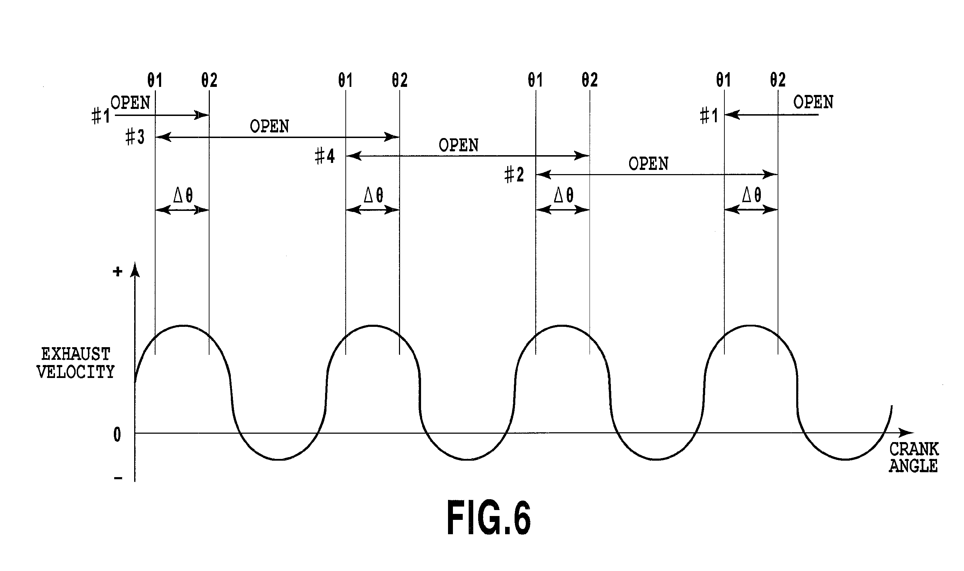

Fig. 6 schematically shows the open and close state of the exhaust valve in each cylinder and the average of the exhaust velocities measured in all the cylinders at a predetermined position in an exhaust port in each cylinder. As shown in Fig. 6, the exhaust velocity changes periodically depending on a change in crank angle. During an exhaust overlap period Δθ, exhaust gas is simultaneously discharged from two cylinders and thus expected to make the maximum peak of the exhaust velocity appear. The exhaust overlap period Δθ appears four times during one engine cycle, and this is expected to cause the maximum peak and thus the minimum peak of the exhaust velocity to appear four times during one cycle.

A diagram indicative of the exhaust velocity is expected to appear directly at the reference position after a delay equivalent to a transport delay time. Thus, this principle is utilized to estimate the value of the exhaust velocity at the reference position.

Specifically, such a exhaust velocity diagram as shown in Fig. 6 is experimentally determined for each engine parameter and stored in the ECU 100 in the form of a map. Then, the ECU 100 calculates the transport delay time from the amount of intake air detected by the airflow meter 4 as an alternative value for the exhaust gas flow rate and the pre-stored physical volume of the exhaust passage in each cylinder from the predetermined position in the exhaust port to the reference position. Then, the ECU 100 constantly estimates the exhaust velocity at the reference position based on the exhaust velocity diagram read from the map, the detected crank angle, and the calculated transport delay time. When or every time the estimated exhaust velocity at the reference position becomes equal to the predetermined value, the ECU 100 allows fuel to be added through the fuel addition valve 9.

An exhaust velocity diagram for a reference engine parameter may be pre-stored and corrected according to a detected actual engine parameter. It is understood that a similar method can be used to estimate the exhaust velocity at the reference position even if the correlation value of the exhaust velocity is used instead of the exhaust velocity itself. The map used in the second aspect can be corrected based on the exhaust velocity at the reference position actually detected in the first aspect. This enables a reduction in errors in the estimation in the second aspect. The estimated exhaust velocity may be corrected based on at least one of the degree of opening of a variable vane of the turbo charger 21 and the degree of opening of the EGR valve 32. The estimation of the exhaust velocity is not limited to the above-described method, but any of various other methods including well-known methods may be adopted.

Now, various examples of synchronous addition control will be described.

### [First example]

First, referring to Fig. 5, a first example will be described. As described above, the best method in view of improved ignitability and combustibility is to add fuel through the fuel addition valve 9 so that the added fuel is ignited when the value of the exhaust velocity at the reference position becomes zero, as shown in Fig. 5(B). In this case, the fuel addition is carried out before a time when the value of the exhaust velocity at the reference position becomes zero, by a time equivalent to the predetermined ignition delay. At this time, naturally, the glow plug 10 is at a high temperature sufficient to allow the added fuel to be ignited. Ignition and combustion occur directly and instantaneously around the glow plug 10, thus generating a large quantity of thermal energy. This example is preferably applied to a case where, when both the small oxidation catalyst 11 and the oxidation catalyst 6 are inactive during an initial period of warm-up, the small oxidation catalyst 11 is preferentially activated.

### [Second example]

As shown in Fig. 5 (A), fuel can also be added through the fuel addition valve 9 when the value of the exhaust velocity at the reference position becomes equal to a predetermined positive value, for example, the maximum peak. In this case, immediately after the addition, the added fuel is blown away downstream and dispersed and can thus not be directly ignited even by the glow plug 10 that is now at a high temperature sufficient to ignite the fuel. However, this example is preferred if the direct ignition by the glow plug 10 is to be avoided. For example, the small oxidation catalyst 11 is activated during warm-up, but while the oxidation catalyst 6 is still inactive, the non-ignited air-fuel mixture M can be supplied to the downstream side oxidation catalyst 6, which can relatively slowly combust the air-fuel mixture M. In contrast, if the glow plug 10 is used to directly ignite the air-fuel mixture M, the thermal energy supplied to the oxidation catalyst 6 may be maximized to excessively increase the temperature of the oxidation catalyst 6. Even immediately after the glow plug 10 is turned off, the glow plug 10 is still at a sufficiently high temperature, and thus, the direct ignition may occur. This example is also preferred when, while the glow plug 10 is at a high temperature, only the added fuel is to be fed to the downstream side with the direct ignition avoided, for example, when the NOx catalyst 7 poisoned with sulfur is to be recovered or the DPF is to be recovered.

Alternatively, as shown in Fig. 5(C), fuel can be added through the fuel addition valve 9 when the value of the exhaust velocity at the reference position becomes equal to a predetermined negative value, for example, the minimum peak. In this case, the added fuel is moved upstream immediately after the addition but then moved forward again and can thus be directly ignited by the glow plug 10 that is at a high temperature sufficient to allow the fuel to be ignited. Alternatively, various conditions such as the amount of fuel added may be controlled to allow the fuel to pass by the glow plug 10 so as to prevent the fuel from being directly ignited by the glow plug 10 and to directly feed the fuel downstream. This allows exertion of effects similar to the effects produced during the forward flow addition.

### [Third example]

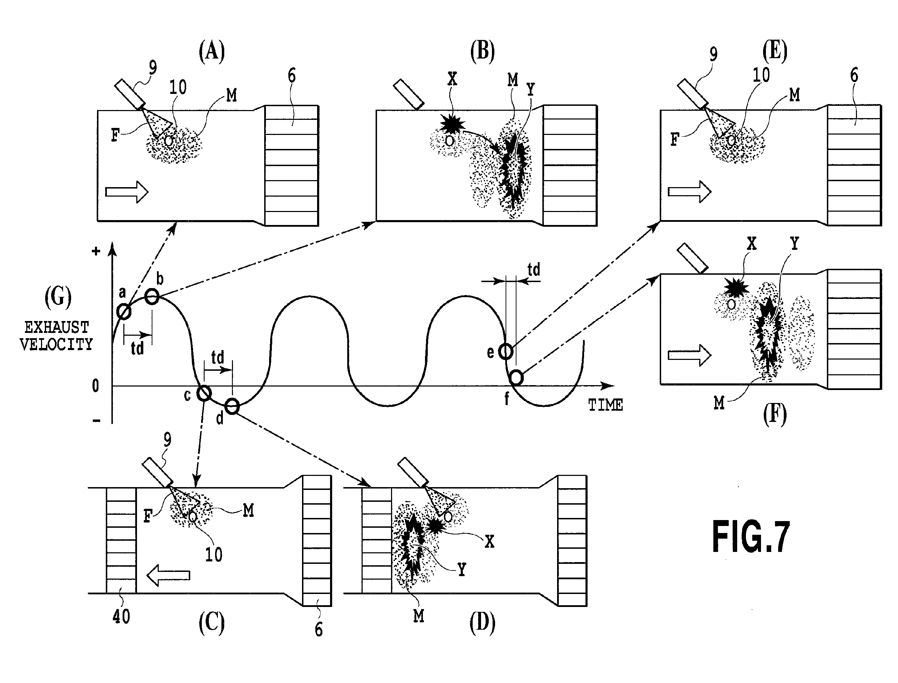

Referring to Fig. 7, Fig. 7(G) shows a variation in the exhaust velocity at the reference position. As shown in Fig. 7 (A), fuel is added through the fuel addition valve 9 when the value of the exhaust velocity at the reference position becomes equal to a predetermined positive value a that is slightly smaller than a maximum peak b. Then, immediately after the addition, a relatively rich air-fuel mixture M is formed around the glow plug 10 as shown in Fig. 7(A). Subsequently, at a point of time when a predetermined ignition delay time td elapses, and in the illustrated example, at a point of time when the value of the exhaust velocity at the reference position reaches the maximum peak b, the air-fuel mixture M moves downstream while diffusing, and a source of fire X is generated near the glow plug 10 (that is, ignition occurs) to cause main combustion Y of the air-fuel mixture M (that is, flames are generated), as shown in Fig. 7(B). The main combustion Y occurs near, that is, immediately before the oxidation catalyst 6.

If the oxidation catalyst 6 is to be actively heated and to have its temperature elevated, when the main combustion occurs at an upstream position distant from the oxidation catalyst 6, heat is radiated to reduce the temperature before flames resulting from the main combustion reach the oxidation catalyst 6. Hence, a sufficient capability of increasing temperature is not expected to be achieved. However, when the main combustion Y occurs immediately before the oxidation catalyst 6, the heat radiation can be minimized to allow a sufficient capability of increasing temperature to be provided.

### [Fourth example]

Fig. 7(C) and 7(D) show a variation in an upstream oxidation catalyst 40 serving as an after-turbo catalyst (ATC) is provided upstream of the burner apparatus 8 and downstream of the turbine 21T. The upstream oxidation catalyst 40 can be configured similarly to the oxidation catalyst 6 and the small oxidation catalyst 11.

The synchronous addition control according to the present invention is effective in actively heating the upstream oxidation catalyst 40 to increase the temperature of the upstream oxidation catalyst 40. As shown in Fig. 7(C), fuel is added through the fuel addition valve 9 when the value of the exhaust velocity at the reference position becomes equal to a predetermined negative value c slightly larger than a minimum peak d before reaching the minimum peak d. Then, immediately after the addition, a relatively rich air-fuel mixture M is formed around the glow plug 10 as shown in Fig. 7(C). Subsequently, at a point of time when the predetermined ignition delay time td elapses, and in the illustrated example, at a point of time when the value of the exhaust velocity at the reference position reaches the minimum peak d, the air-fuel mixture M moves upstream while diffusing, and a source of fire X is generated near the glow plug 10 (that is, ignition occurs) to cause the main combustion Y of the air-fuel mixture M (that is, flames are generated), as shown in Fig. 7(D). The main combustion Y occurs upstream of the glow plug 10 and near, that is, immediately after the oxidation catalyst 6.

If the upstream oxidation catalyst 40 is to be actively heated and to have its temperature elevated, when the main combustion occurs at a downstream position distant from the upstream oxidation catalyst 40, heat is radiated to reduce the temperature before flames resulting from the main combustion reach the upstream oxidation catalyst 40. Furthermore, exhaust gas flows generally from the upstream side to the downstream side, thus hindering flames resulting from the main combustion Y occurring at the upstream position distant from the upstream oxidation catalyst 40 from reaching the upstream oxidation catalyst 40. Hence, a sufficient capability of increasing temperature is not expected to be achieved. However, if the fuel addition is carried out at a timing when the value of the exhaust velocity becomes equal to a predetermined negative value, that is, at a timing when the exhaust gas is flowing backward, the main combustion Y can occur immediately after the upstream oxidation catalyst 40. Hence, the temperature of the upstream oxidation catalyst 40 can be sufficiently increased.

### [Fifth example]

Figs. 7(E) and 7(F) show an example in which the oxidation catalyst 6 is to be actively heated to have its temperature elevated, though not as actively as in the third example. As shown in Fig. 7 (E), fuel is added through the fuel addition valve 9 when the value of the exhaust velocity at the reference position becomes equal to a predetermined positive value e that is slightly larger than zero. Then, immediately after the addition, a relatively rich air-fuel mixture M is formed around the glow plug 10 as shown in Fig. 7(E). Subsequently, at a point of time when a predetermined ignition delay time td elapses, and in the illustrated example, at a point of time when the value of the exhaust velocity at the reference position reaches a value f that is close to zero, the air-fuel mixture M moves downstream while diffusing, and a source of fire X is generated near the glow plug 10 (that is, ignition occurs) to cause the main combustion Y of the air-fuel mixture M (that is, flames are generated), as shown in Fig. 7(F). Compared to the third example, the fifth example carries out the fuel addition while the exhaust velocity has a small value, and thus, the main combustion Y occurs at an upstream position more distant from the oxidation catalyst 6, thus degrading the capability of increasing the temperature of the oxidation catalyst 6.

Since the fuel addition is carried out when the exhaust velocity has a small positive value, particularly when the exhaust velocity is very close to zero, the air-fuel mixture M does not substantially move or diffuse but tends to be stagnant near the glow plug 10. Hence, the fifth example is inferior to the third example in the capability of increasing the temperature of the oxidation catalyst 6 but is more advantageous than the third example in the stability and reliability of ignition.

In any of the third example to the fifth example, the fuel addition is carried out while the exhaust gas is flowing toward the temperature increase target (the oxidation catalyst 6 in the third example and the third example and the upstream oxidation catalyst 40 in the fourth example) to improve the capability of increasing the temperature of the temperature increase target. In contrast, in a sixth example and a seventh example described below, the fuel addition is carried out while the exhaust gas is flowing backward with respect to the temperature increase target to suppress or prevent an excessive increase in the temperature of the temperature increase target.

### [Sixth example]

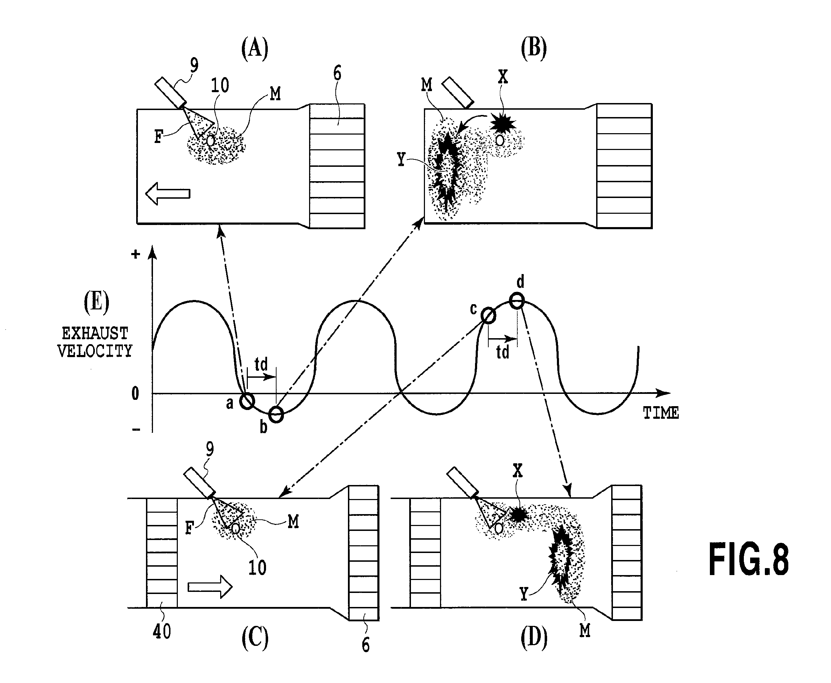

Referring to Fig. 8, a variation in the exhaust velocity at the reference position is shown in Fig. 8(E), and how control in a sixth example is performed is shown in Figs. 8(A) and 8(B). As shown in Fig. 8(A), fuel is added through the fuel addition valve 9 when the value of the exhaust velocity at the reference position becomes equal to a predetermined negative value a slightly larger than the minimum peak b. Then, immediately after the addition, a relatively rich air-fuel mixture M is formed around the glow plug 10 as shown in Fig. 8 (A). Subsequently, at a point of time when the predetermined ignition delay time td elapses, and in the illustrated example, at a point of time when the value of the exhaust velocity at the reference position reaches the minimum peak b, the air-fuel mixture M moves upstream while diffusing, and a source of fire X is generated near the glow plug 10 (that is, ignition occurs) to cause the main combustion Y of the air-fuel mixture M (that is, flames are generated), as shown in Fig. 8(B). The main combustion Y occurs at an upstream position of the glow plug 10 which is relatively distant from the oxidation catalyst 6.

When the main combustion Y occurs at an upstream position distant from the oxidation catalyst 6, heat is radiated to reduce the temperature before flames resulting from the main combustion Y reach the oxidation catalyst 6. Hence, the capability of increasing the temperature of the oxidation catalyst 6 can be degraded to suppress an excessive increase in the temperature of the oxidation catalyst 6.

### [Seventh example]

Figs. 8(C) and 8(D) show an example in which the upstream oxidation catalyst 40 is provided as in the case of the fourth example and in which an excessive increase in the upstream oxidation catalyst 40 is suppressed. As shown in Fig. 8(C), fuel is added through the fuel addition valve 9 when the value of the exhaust velocity at the reference position becomes equal to the predetermined negative value c slightly smaller than a maximum peak d. Then, immediately after the addition, a relatively rich air-fuel mixture M is formed around the glow plug 10 as shown in Fig. 8(C). Subsequently, at a point of time when the predetermined ignition delay time td elapses, and in the illustrated example, at a point of time when the value of the exhaust velocity at the reference position reaches the maximum peak d, the air-fuel mixture M moves downstream while diffusing, and a source of fire X is generated near the glow plug 10 (that is, ignition occurs) to cause the main combustion Y of the air-fuel mixture M (that is, flames are generated), as shown in Fig. 8(D). The main combustion Y occurs at a downstream position of the glow plug 10 which is relatively distant from the upstream oxidation catalyst 40.

When the main combustion Y occurs at the downstream position distant from the upstream oxidation catalyst 40 while the exhaust gas is flowing downstream (that is, forward), the flames resulting from the main combustion Y are hindered or prevented from reaching the upstream oxidation catalyst 40. Hence, the capability of increasing the temperature of the upstream oxidation catalyst 40 can be degraded to suppress an excessive increase in the temperature of the upstream oxidation catalyst 40.

### [Eighth example]

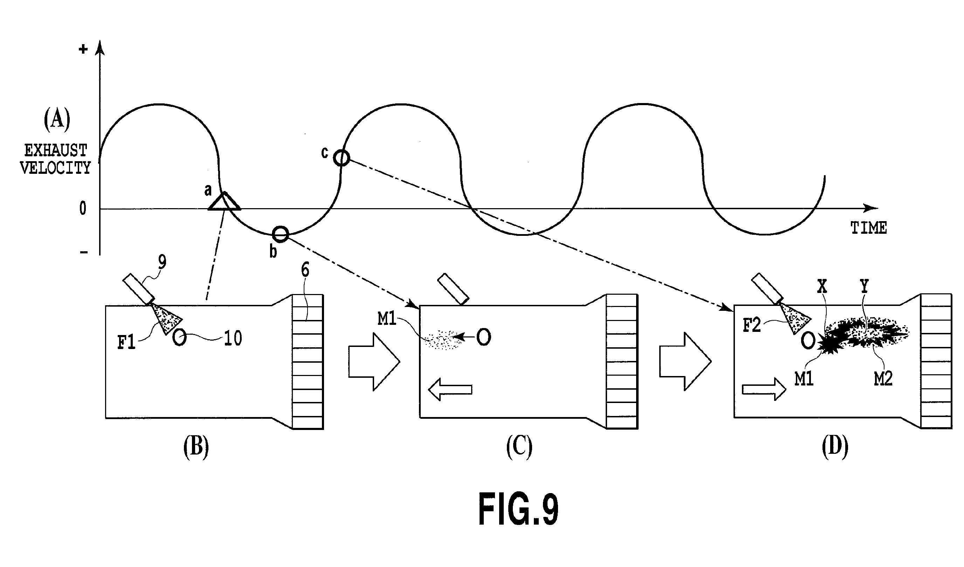

Now, an eighth example will be described with reference to Fig. 9. Fig. 9(A) shows a variation in the exhaust velocity at the reference position, and Figs. 9 (B) to 9 (D) show how control in an eighth example is performed.

In this example, the fuel addition valve 9 is allowed to carry out a pilot addition in which a relatively small amount of fuel is added and to carry out, after the pilot addition, a main addition in which a larger amount of fuel is added than during the pilot addition. This will be described below in detail.

As shown in Fig. 9(B), when the value of the exhaust velocity at the reference position becomes zero a while changing from positive to negative, a relatively small amount of pilot fuel F1 is added through the fuel addition valve 9. Then, the pilot fuel F1 forms a relatively rich air-fuel mixture (pilot air-fuel mixture) M1 around the glow plug 10, and is then reformed or upgraded into an ignitable state by heat from the glow plug 10.

Then, as shown in Fig. 9(C), the air-fuel mixture M1 containing the upgraded pilot fuel F1 is temporarily moved upstream as a result of the value of the exhaust velocity at the reference position becoming negative, that is, the flow direction of the exhaust gas changing to backward. Fig. 9(C) shows that the value of the exhaust velocity at the reference position is equal to the maximum peak b.

Then, as shown in Fig. 9(D), the value of the exhaust velocity at the reference position changes from negative to positive, that is, the flow direction of the exhaust gas changes from backward to forward, to move the pilot air-fuel mixture M1 downstream. The pilot air-fuel mixture M1 temporarily moves backward and then forward, and during this process, is further upgraded by the heat of the glow plug 10 and the exhaust gas. After the flow direction of the exhaust gas changes, a relatively large amount of main fuel F2 is added through the fuel addition valve 9 at a point of time when the value of the exhaust velocity at the reference position becomes a predetermined positive value c.

Then, an air-fuel mixture (main air-fuel mixture) M2 formed by the main fuel F2 is moved downstream. On the other hand, the pilot air-fuel mixture M1, which has already been upgraded so as to be easily ignited, is ignited near the glow plug 10 to generate a source of fire X. The source of fire X combusts the main air-fuel mixture M2 to cause the main combustion Y (that is, flames are generated). The main combustion Y occurs downstream of the glow plug 10 and upstream of the oxidation catalyst 6. When ignited, the pilot air-fuel mixture M1 is sufficiently close to the main air-fuel mixture M2 or has already joined the main air-fuel mixture M2. Hence, a series of events occur consecutively and reliably, which start with the ignition of the pilot air-fuel mixture M1 and end with the combustion of the main air-fuel mixture M2.

As described above, the pilot air-fuel mixture M is upgraded and temporarily moved backward and then forward again so as to be ignited. The pilot air-fuel mixture M can thus be used as a source of fire for combusting the main air-fuel mixture M2. Consequently, the main air-fuel mixture M2 can be reliably and stably ignited and combusted, significantly improving the ignitability and combustibility of the added fuel as a whole.

In this example, the pilot addition is carried out once. However, the pilot addition may be carried out a plurality of times. The temperature of the heating section of the glow plug 10 is normally controlled to a predetermined constant value (for example, 900°C). However, when this example is implemented, the temperature of the heating section of the glow plug 10 is preferably controlled to a predetermined lower-temperature value (for example, 600°C) so as to prevent the pilot fuel F1 from being directly ignited by the glow plug 10 immediately after the addition.

### [Ninth example]

Now, a ninth example will be described. The ninth example relates to control for stabilizing the temperature of the heating section of the glow plug 10.

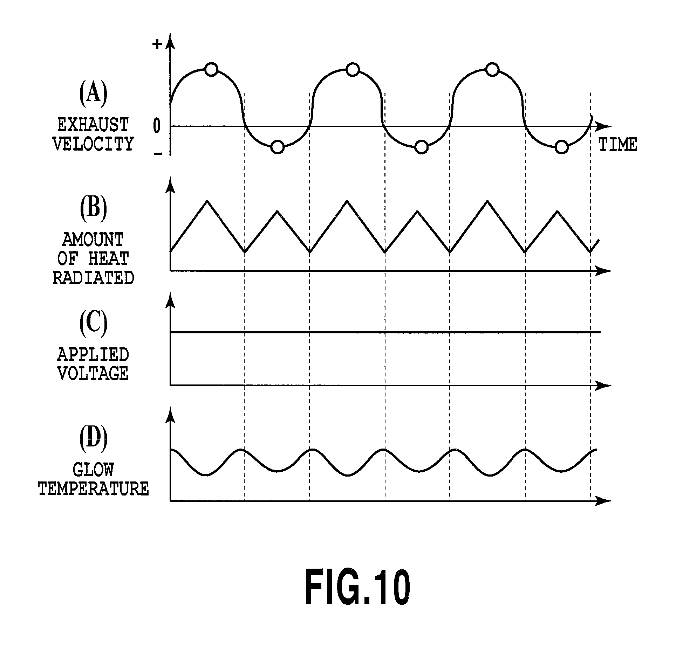

Fig. 10 shows a comparative example in which the present invention is not applied. Fig. 10 (A) shows a variation in the exhaust velocity at the reference position.

Fig. 10 (B) shows the amount of heat radiated by the heating section of the glow plug 10. Fig. 10 (C) shows an applied voltage supplied to the glow plug 10. Fig. 10(D) shows the temperature (glow temperature) of the heating section of the glow plug 10.

The ECU controls power supplied to the glow plug 10 to control the glow temperature. In this case, the applied voltage supplied to the glow plug 10 is controlled. However, an applied current may be controlled. In particular, the ECU 100 controls the applied voltage so as to keep the glow temperature at a predetermined constant value wherever possible (for example, 900°C) .

As shown in Fig. 10(C), the applied voltage supplied to the glow plug 10 is constant in the comparative example.

However, as shown in Figs. 10(A) and 10(B), the exhaust velocity varies, correspondingly varying the amount of heat radiated by the heating section of the glow plug 10. The amount of heat radiated increases consistently with the absolute value of the exhaust velocity and is minimized at an exhaust velocity of zero.

Since the amount of heat radiated varies as described above, the glow temperature varies with an increase and a decrease in the amount of heat radiated as shown in Fig. 10 (D). An increase in the amount of heat radiated reduces the glow temperature, and a decrease in the amount of heat radiated increases the glow temperature. As a result, the glow temperature is not constant.

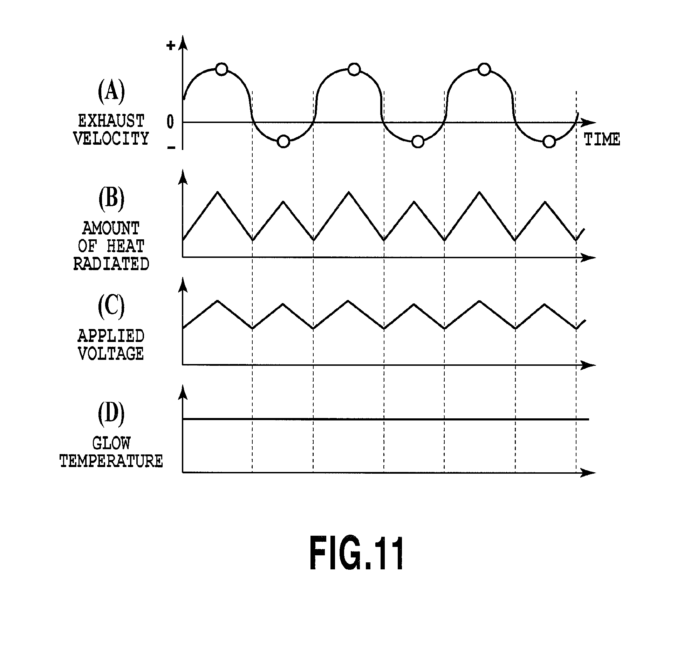

In contrast, Fig. 11 shows an example in which the present invention is applied. As shown in Fig. 11(C), the ECU 100 varies the applied voltage in synchronism with a variation in exhaust velocity. Specifically, the ECU 100 increases and reduces the applied voltage consistently with the absolute value of the exhaust velocity. The applied voltage is minimized at an exhaust velocity of zero.

Then, the applied voltage can be increased and reduced consistently with the amount heat radiated. Thus, the applied voltage can be controlled according to the amount of heat radiated. As a result, as shown in Fig. 11(D), the glow temperature can be maintained constant, enabling the ignitability and combustibility to be further stabilized.

The control in the ninth example is applicable to any of the first to eighth examples.

Various other embodiments of the present invention are possible. For example, the number, type, arrangement order, and the like of exhaust treatment apparatuses arranged downstream of the small oxidation catalyst are optional.

The present invention has been somewhat specifically described. It should be understood that various alterations and changes may be made without departing from the spirits and scope of the claimed invention. The embodiments of the present invention are not limited to the above-described embodiments, but the present invention includes all variations and applications embraced in the concepts of the present invention specified by the claims. Thus, the present invention should not be interpreted in a limited manner but is applicable to any other techniques belonging to the scope of spirits of the present invention. The means for solving the problems according to the present invention can be combined for use wherever possible.

## Claims

1. An internal combustion engine comprising:
an exhaust treatment apparatus provided in an exhaust passage;
a burner apparatus provided upstream of the exhaust treatment apparatus; and
burner control means for controlling the burner apparatus,
wherein the burner apparatus comprises at least a fuel addition valve that adds fuel into the exhaust passage and heating means for heating the fuel added through the fuel addition valve, and
the burner control means allows fuel to be added through the fuel addition valve in synchronism with a variation in an exhaust velocity at a predetermined position at or near the burner apparatus.

2. The internal combustion engine according to claim 1, wherein the burner control means allows fuel to be added through the fuel addition valve in such a manner that the added fuel is ignited when a value of the exhaust velocity at the predetermined position becomes zero.

3. The internal combustion engine according to claim 1, wherein the burner control means allows fuel to be added through the fuel addition valve when the value of the exhaust velocity at the predetermined position becomes equal to a predetermined positive or negative value.

4. The internal combustion engine according to claim 1, wherein the burner control means allows fuel to be added through the fuel addition valve when the value of the exhaust velocity at the predetermined position becomes equal to the predetermined positive value and when the added fuel combusts near the exhaust treatment apparatus.

5. The internal combustion engine according to claim 1, wherein the burner control means allows fuel to be added through the fuel addition valve when the value of the exhaust velocity at the predetermined position becomes equal to the predetermined negative value and when the added fuel combusts upstream of the heating means.

6. The internal combustion engine according to claim 1, wherein the burner control means allows the fuel addition valve to carry out a pilot addition in which a relatively small amount of fuel is added per addition and to carry out, after the pilot addition, a main addition in which a larger amount of fuel is added than during the pilot addition, and
allows the fuel addition valve to carry out the pilot addition when the value of the exhaust velocity at the predetermined position becomes zero while changing from positive to negative and subsequently to carry out the main addition when the value of the exhaust velocity at the predetermined position becomes equal to the predetermined positive value after changing from negative to positive.

7. The internal combustion engine according to any one of claims 1 to 6, wherein the heating means comprises a glow plug, and the internal combustion engine further includes glow control means for controlling power supplied to the glow plug, and
the glow control means changes the power supplied to the glow plug in synchronism with a variation in the exhaust velocity at the predetermined position.

8. The internal combustion engine according to any one of claims 1 to 7, further comprising acquisition means for acquiring the value of the exhaust velocity at the predetermined position or a correlation value of the exhaust velocity, and
the burner control means controls an addition period for the fuel addition valve based on the value of the exhaust velocity or the correlation value of the exhaust velocity acquired by the acquisition means.

9. The internal combustion engine according to any one of claims 1 to 8, wherein the burner apparatus further comprises a small oxidation catalyst provided in the exhaust passage downstream of the heating means.
